# EUROPEAN PATENT SPECIFICATION

(11) **EP 0 923 983 B1**
(45) Date of publication and mention of the grant of the patent: **23.08.2006**
(21) Application number: 98123918.9
(22) Date of filing: 16.12.1998
(51) Int. Cl.: B01D 63/06

(54) **Monolithic ceramic filter**
Monolithisches Keramikfilter
Filtre ceramique monolithique

(30) Priority: 17.12.1997 JP 34825397
(43) Date of publication of application: 23.06.1999
(73) Proprietor: NGK INSULATORS, LTD., Nagoya-City, Aichi Pref. 467-8530 (JP)
(72) Inventor: Akitsu, Yasuo, Hnada-city, Aichi-perfecture 475-0836 (JP); Katsu, Masanori, Nagoya-city, Aichi-prefecture 467-0055 (JP)
(74) Representative: TBK-Patent

(56) References cited:
- EP-A1- 0 787 524
- EP-A1- 0 899 003
- WO-A1-88/07398
- WO-A1-90/03831
- DE-A1- 4 324 347
- JP-A- 6 099 039
- JP-A- 60 216 819
- US-A- 4 417 908

## Description

### Background of the Invention and Related Art Statement

The present invention relates to a monolithic ceramic filter according to the preamble of claim 1 for filtering water or other liquids.

There is disclosed in JP-B-16819, JP-A-86918, JP-A-6-99039 and the like a monolithic ceramic filter provided with porous ceramic filtration membranes having an average diameter of fine pores smaller than that of the fine pores of a porous ceramic support body on the interior circumferential surface of partition walls, which define each of numerous flow channels formed, being extended in parallel to one another along the longitudinal direction of the ceramic support body; said filter permeating a portion of a liquid to be treated, which is supplied to each flow channel from one end thereof, through the ceramic filtration membranes so as to penetrate into the interior portions of said partition walls, and flowing out of the ceramic support body through said partition walls.

Since said monolithic ceramic filter has characteristics such as high separation performance, high strength, high corrosion-resisting properties, high stability to chemical washing and a long lifespan, it has attracted attention in that it is superior to organic membrane filters composed mainly of organic filtration membranes, such as synthetic resin.

An attempt has been made to enlarge filtration area by scaling up a monolithic ceramic filter of said type so as to use such a scaled-up filter for the treatment of water in a large amount such as, for example, water supply, or other liquids(liquids to be treated) in a large amount. However, there is a problem in that the permeability of a liquid to be treated per unit filtration area is reduced because the permeability for a liquid to be treated, such as water permeability is lowered; since the larger in size the monolithic ceramic filter becomes, the greater the flow resistance in the interior also becomes. Thus, effects in the improvement of filtration capability are not as high as expected in the case where the filter size is scaled up so as to increase the filtration capability.
To cope with the aforementioned problem, in the case of the ceramic filter proposed in JP-B-6-16819(hereinafter referred to as the first publication), among those proposed in said patent publications, there is provided a plurality of slots extending from the exterior circumferential surface of a ceramic support body to the central portion. Additionally, there is adopted a means for sealing the open end of each flow channel through which a slot passes.
In the case of the ceramic filter proposed in JP-A-6-86918 (hereinafter referred to as the second publication),there is employed the flow resistance alleviation portions formed in the ceramic support body through which wall portions, being integrated with partition walls and thicker than the partition walls, pass.
In the case of the ceramic filter proposed in JP-A-6-99039 (hereinafter referred to as the third publication),there is installed a plurality of grooves or recesses extending from the exterior circumferential surface of a ceramic support body to the central portion. There is also provided a means of sealing the open end of each flow channel through which the grooves or the recesses pass.

In the case of the aforementioned ceramic filters, a ceramic support body as a basal body is generally molded by extrusion and then fired. However, since deformation can easily occur during molding, it is difficult to form a ceramic support body with a special structure. Moreover, the ceramic support body formed by molding and firing is so fragile and so hard that it is difficult to cut the ceramic support body into a special structure, and the ceramic support body is easily damaged during cutting which causes a considerable reduction in it's strength.

Therefore, it is difficult through the methods of molding and cutting to form either a plurality of slots extending from the exterior circumferential surface of the ceramic support body to the central portion, or a plurality of grooves or recesses, as in the ceramic filters proposed in the aforementioned first and third publications. Additionally, there is a problem in that the strength of the ceramic support body is considerably reduced by cuts. Also, as in the ceramic filter proposed in the aforementioned second publication, if wall portions are formed and integrated with partition walls and are thicker than the partition walls, are provided through the ceramic support body in order to form flow-resistance alleviation portions, the problems with cutting decrease by properly selecting a molding nozzle used for extrusion molding. However, problems still remain in that; the filtration area is reduced by the spaces occupied by the flow-resistance alleviation portions, and the effects of alleviating flow resistance are small in comparison with a reduction in the filtration area.

A generic monolithic ceramic filter is known from WO-A-88/07 398 and comprises a porous ceramic support body with a plurality of through holes defining first and second flow channels extending in a longitudinal direction thereof in parallel to one another; partition walls for defining the first and second flow channels; and ceramic filtration membranes only provided on the interior circumferential surfaces of the partition walls defining the first flow channels. The permeate channels are formed by cutting or drilling. The ceramic filtration membrane have a pore diameter , smaller than that of the ceramic support body so that a portion of liquid to be treated, supplied from one end or both ends of the ceramic support body to each of the first flow channels permeates through the ceramic filtration membranes and enters into the partition walls and then flows out of the ceramic support body through the partition walls. An array of the second flow channels extends toward the exterior circumferential surface of the ceramic support body. Longitudinal open ends of each of the flow channels constituting the array of the second flow channels are sealed with sealing members made from porous material with pores having a diameter less than that of pores of the ceramic filtration membranes.

A further similar monolithic ceramic filter is known from WO-A-90/03831.

### SUMMARY OF THE INVENTION

It is an object of the invention to further develop a monolithic ceramic filter according to the preamble of claim 1 such that the filter is capable of reducing flow resistance and which is high in strength, excellent in permeability and high in filtration efficiency.

According to the invention, this object is achieved by a monolithic ceramic filter having the features of claim 1.

Advantageous further developments are defined in the dependent claims.

In a ceramic filter according to the present invention the ceramic filtration membranes are not present on the interior circumferential surfaces of the partition walls that define at least an array of flow channels formed in series, in parallel with one another, extended toward the exterior circumferential surface of the ceramic support body in a linear form or a refraction form. The respective open ends of said flow channels in the longitudinal direction are sealed with a sealing member having a diameter of fine pores equal to or less than that of fine pores of the ceramic filtration membrane.

Preferably the number of second flow channels is smaller compared with the number of first flow channels constituting other arrays. The lateral width of at least one of the second flow channels is wider than that of each first flow channel constituting the other arrays.

Furthermore each second flow channel may differ in shape from each first flow channel constituting the other arrays. The lateral partition wall between the flow channels is thicker than those defining the first flow channels.

The exterior wall of the outermost flow channel of the second flow channels may be thinner than that of the outermost flow channel of the first flow channels constituting the other arrays. The partition walls between the second flow channels are inclined in a parallel direction in which the partition walls of the first flow channels are arranged.

The exterior wall of the outermost flow channels of the second flow channels is formed from openings formed in the exterior circumference of the ceramic support body and sealed with a sealing member, with said sealing member having a diameter of fine pores larger than the diameter of the fine pores in the exterior circumference. The widths of the second flow channels can be made incrementally larger in the exterior circumferential direction of the ceramic support body.

A hollow portion to which said array is connected is formed in the ceramic support body. The lateral partition wall between the second flow channels is thinner than that between the first flow channels constituting the other arrays.

In the present invention, the expression "a smaller diameter of fine pores " means both that the maximum diameter of the fine pores is smaller than that of a ceramic support body which is an object of comparison, and that an average diameter of fine pores is smaller than that of the ceramic support body.

In the monolithic ceramic filter with the aforementioned constitution, the ceramic filtration membranes are not present on the interior circumferential surfaces of the partition walls that define at least an array of flow channels formed in series, in parallel with one another, extended toward the exterior circumferential surface of the ceramic support body in a linear form or a refraction form, and those flow channels and partition walls as a whole constitute a flow-resistance alleviation portion extending in a parallel direction thereof. In addition, the longitudinal open end of each of those flow channels is eye-sealed, so that the liquid to be treated, which is supplied to the front end of the ceramic filter, does not flow into those flow channels.

For this reason, a filtered liquid that entered into partition walls from adjacent flow channels through the ceramic filtration membranes easily flows into the flow channels constituting the flow-resistance alleviation portions, thus upon entry a filtrate flows through the flow-resistance alleviation portions in a parallel direction, reaches the exterior of the ceramic support body, and flows out of the ceramic filter.

Incidentally, in the ceramic filter of the present invention, a step for pouring and adhering a ceramic slip for filtration membrane formation is used as means for forming ceramic filtration membranes on the interior circumference of the partition walls defining flow channels. However, if in forming ceramic filtration membranes, a ceramic slip is not poured into the flow channels constituting the flow-resistance alleviation portions, the ceramic filtration membranes will not be formed on the interior circumference of the partition walls defining the flow channels.

Therefore, in the ceramic filter of the present invention, the flow-resistance alleviation portions can be formed without using cutting process. For this reason, there is no strength reduction being attributed to cuttings, and the formation of slots, grooves and recesses. As a consequence, the ceramic filter according to the present invention is high strength, excellent in permeability, and high in filtration efficiency.

The above object and additional advantages will become apparent from the following detailed description when read in conjunction with the accompanying drawings.

### Brief Description of the Drawings

Fig. 1 is a perspective view showing a first example of a ceramic filter according to the present invention.
Fig. 2 is an enlarged sectional cutout view showing the ceramic filter of Fig. 1.
Fig. 3 is a vertical sectional view showing a second example of the ceramic filter according to the present invention.
Fig. 4 is a vertical sectional view showing a modification of the ceramic filter of Fig. 3.
Fig. 5 is a vertical sectional view showing a third example of a ceramic filter according to the present invention.
Fig. 6 is a vertical sectional view showing one modification of the ceramic filter of Fig. 5.
Fig. 7 is a vertical sectional view showing another modification of the ceramic filter of Fig. 5.
Fig. 8(a) is a vertical sectional cutout view showing a fourth example of the ceramic filter according to the present invention; Fig. 8(b) is a vertical sectional cutout view showing one modification of the fourth example; Fig. 8 (c) is a vertical sectional cutout view showing another modification of the fourth example; Fig. 8(d) is a vertical sectional cutout view showing a further modification of the fourth example.
Fig. 9(a) is a vertical sectional cutout view showing a fifth example of the ceramic filter according to the present invention; Fig. 9(b) is a vertical sectional cutout view showing one modification of the fifth example; Fig. 9(c) is a vertical sectional cutout view showing another modification of the fifth example.
Fig. 10(a) is a vertical sectional cutout view showing a sixth example of the ceramic filter according to the present invention; Fig. 10(b) is a vertical sectional cutout view showing one modification of the sixth example.

### Detailed Description of Preferred Embodiments

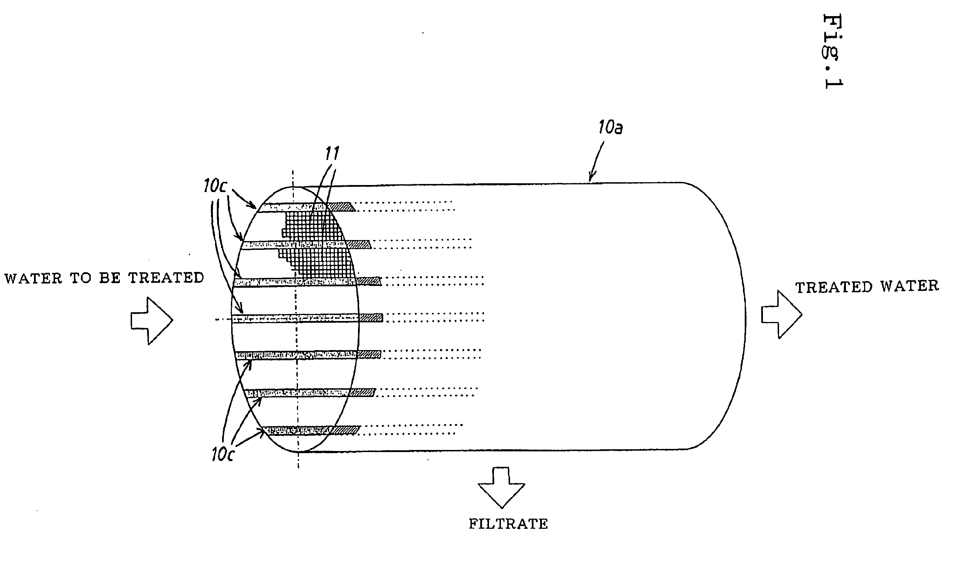

Referring to Fig. 1, there is schematically shown the first example of a ceramic filter according to the present invention. The ceramic filter is a large sized filter that is used for treating a liquid in large quantity such as a water supply.

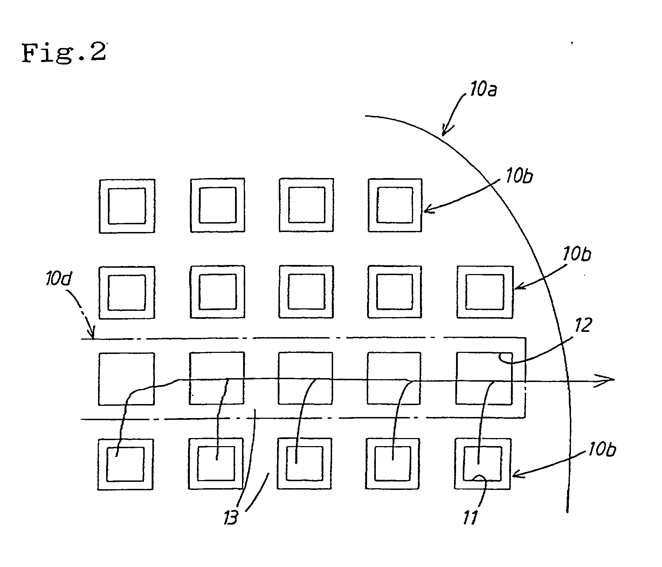

The present ceramic filter comprises a porous ceramic support body 10a, a ceramic filtration membrane 10b, and an eye-sealing member 10c, as illustrated in Figs. 1 and 2: said ceramic body 10a, as a main portion, being formed by extrusion-molding; a compact from an adjusted earth prepared by mixing an organic binder, an inorganic binding agent, water and the like with ceramic powder, drying the compact, and firing the dried compact.

The ceramic support body 10a is cylindrical in shape and provided with a large number of flow channels arranged in parallel to one another and extending in the longitudinal direction thereof. Each through pore presents a square and constitutes a flow channel for the liquid to be treated. The ceramic support body 10a is 200 mm in diameter, and 1000 mm in length, with the side of the square through pore being 4 mm, the thickness of the partition wall for defining each through pore being 2 mm, and the average diameter of fine pores being 10 µm; said ceramic support body 10a being composed of, as its material, an appropriate ceramic powder such as alumina, silica, mullite, cordierite, silicon carbide, silicon nitride or the like.

The ceramic filtration membranes 10b are formed on the interior circumferential surfaces of the partition walls which define all through pores except for a large number of through pores located at specific positions, with formation of each of said through pores in flow channels for a liquid to be treated. The ceramic filtration membranes 10b have a thickness of 100 µm and an average diameter of fine pores of 0.1 µm, and are formed by pouring a slip, which is prepared by mixing an organic binder, water and the like with ceramic powder into each predetermined through pore of the ceramic support body 10a, then adhering the ceramic component in the poured slip to the interior circumferential surface of each through pore, drying the resultant, and firing the resultant. As a material for thus formed ceramic filtration membranes 10b is employed a similar material to that for the ceramic support body 10a.

As occasion demands, a ceramic intermediate layer with a average fine pore diameter intermediate between each partition wall and the ceramic filtration membrane 10b can be provided on the interior circumferential surface of each flow channels of the ceramic support body 10a. This may enhance the formability of the ceramic filtration membranes 10b to the interior circumferential surfaces of the partition walls of the ceramic support body 10a.

In the aforementioned ceramic filter, the through pores of the ceramic support body 10a may have any appropriate shape, such as a square, a rectangle, a polygon, and a circle; an appropriate size; an appropriate length; and an appropriate partition wall thickness. Also, as an average fine pore diameter will be selected any appropriate value within the range of 0.1 µm to a few 100 µm. The same may be said of the ceramic filtration membrane 10b. The ceramic filtration membrane 10b may have any appropriate thickness, and any appropriate value as an average fine pore diameter may be selected within the range of a few 10 angstroms to a few 10µm.

The eye-sealing members 10c hermetically seal the open ends of a specified array of the flow channels arranged in parallel among those channels. The eye-sealing members 10c are formed from a material prepared by coating a ceramic material similar to the ceramic support body 10a with a ceramic material similar to the ceramic filtration membranes 10b. Since it is important that a filtrate does not leak out, the eye-sealing member 10c should have a fine pore diameter equal to or less than that of the ceramic filtration membranes 10b.

Hence, in the aforementioned ceramic filter, two kinds of flow channels exist: the first one being flow channels where the ceramic filtration membranes 10b are formed on the interior circumferential surfaces of the partition walls which define the flow channels (referred to as a first flow channel 11) and the second one being flow channels where the ceramic filtration membranes 10b are not formed on the interior circumferential surfaces of the partition walls (referred to as a second flow passage 12). As is illustrated in Figs. 1 and 2, the second flow channels 12 are vertically located in series at predetermined stage intervals and constitute horizontally a plurality of arrays 10d of flow channels arranged in parallel. Those arrays 10d extend laterally in parallel to one another and reach the exterior circumference of the ceramic filter (the exterior circumference of the ceramic support body 10a).

Each of the second flow channels 12 constituting the array 10d does not have the ceramic filtration membrane 10b at the interior circumferential surface. For this reason, the filtered fluid, which permeates through the ceramic filtration membrane 10b of each first flow channel 11 and enters into the partition wall 13, flows easily into the second flow channel 12 and the partition wall 13 between the adjacent second flow channels 12. Therefore, the array 10d of second flow channels 12 constitutes the flow-resistance alleviation portion. Since the flow-resistance alleviation portion is comprised of a great number of second flow channels 12 in a hollow state, a flow resistance in the flow-resistance alleviation portion is considerably low compared with that within the partition wall 13.

In the monolithic ceramic filter with the aforementioned constitution, as shown in Fig. 1, a liquid to be treated is supplied at the front end thereof, and flows out of the rear end thereof; during which period a part of said liquid permeates through the ceramic filtration membranes 10b, then enters into the partition walls 13, and finally flows out of the exterior circumference of the ceramic support body 10a as a filtrate.

In the monolithic ceramic filter, since a plurality of arrays 10d consisting of second flow channels 12 constitute flow-resistance alleviation portions, and the longitudinal open ends of those second flow channels 12 are sealed and closed with the eye-sealing members 10c, the liquid supplied at the front end of the ceramic filter does not flow into the second flow channels 12.

Therefore, as schematically shown by an arrow in Fig. 2, the filtrate which permeates through the ceramic filtration membranes 10b from the respective first flow channels 11 adjacent each other and enters into the partition walls 13, flows easily into the second flow channels 12 constituting the flow-resistance alleviation portions, and then the penetrated filtrate flows in the series of second flow channels 12 formed parallel in sequence through the partition walls 13, then reaches the exterior of the ceramic filter (i.e., ceramic support body 10a), and flows out from the exterior of the ceramic filter.

Incidentally, in the aforementioned ceramic filter, the means for pouring a ceramic slip for formation of filtration membranes into each through pore and also for adhering the slip to the walls surface thereof has been adopted as the means for forming the ceramic filtration membranes 10b on the interior circumferential surfaces of the partition walls 13 which define each of the flow channels. However, at the time of forming the ceramic filtration membranes 10b, if the slip is not poured into the through pores that form the second flow channels 12 constituting the flow-resistance alleviation portions, the ceramic filtration membranes 10b will not be formed on the interior circumferential surfaces of the partition walls 13 that define the second flow channels 12.

Therefore, in the aforementioned present ceramic filter, the flow-resistance alleviation portions are formed without being cut. Thus, strength reduction normally attributed to cuts and produced by cutting, or the formation of slots, grooves or recesses, is eliminated. Thus, the aforementioned ceramic filter becomes a ceramic filter that is high in strength, excellent in permeability and high in filtration efficiency.

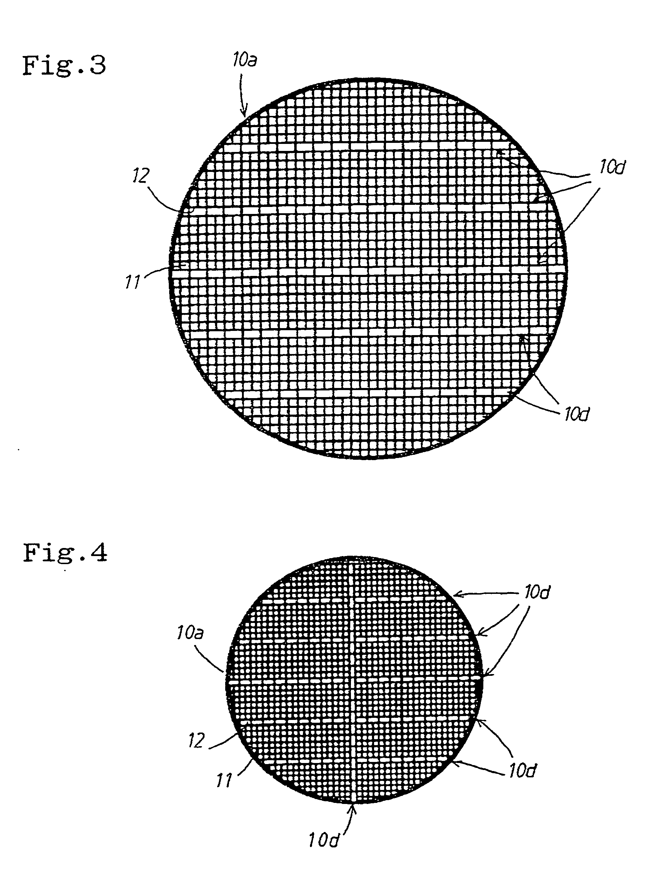

Fig. 3 illustrates a second example of the ceramic filter according to the present invention. In this ceramic filter, the second flow channels 12 constituting an array 10d are each formed wide in lateral width compared with the first flow channels 11. The number of partition walls 13 defining the second flow channels 12 is less compared with the number of partition walls 13 defining the first flow channels 11 constituting the other arrays.

In the ceramic filter of this second example, the second flow channels 12 are formed in such a size that two first flow channels 11 and a single array of partition walls 13 defining those two channels are united. The constituted second flow channels 12 have a broader width, and the partition walls 13 as a whole constitute a plurality of flow-resistance alleviation portions laterally extending in parallel in the vertical direction.

Note in the ceramic filter of the second example that the second flow channels 12 may be constructed to vary in width among the respective flow-resistance alleviation portions or may be constructed to vary in width between a single flow-resistance alleviation portion. Also, note in Fig. 4 that an array 10d of second flow channels 12 can be constructed to be present across the remaining arrays 10d within the ceramic support body 10a.

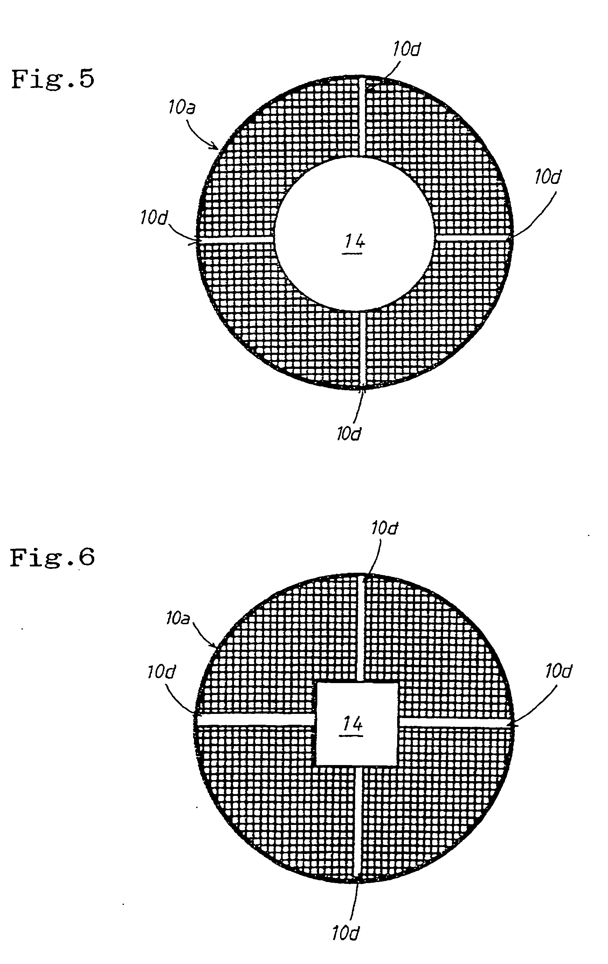

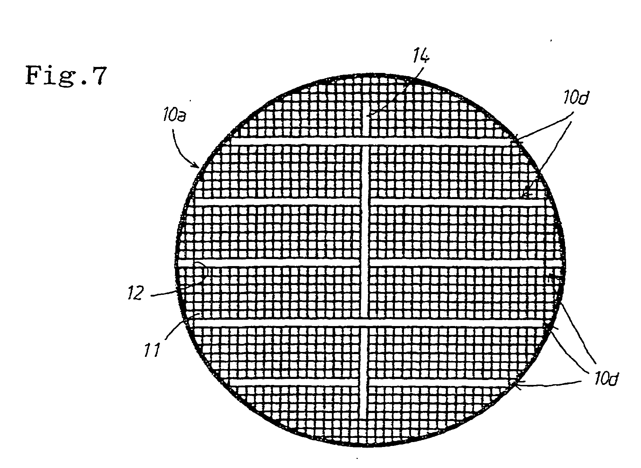

In Figs. 5 through 7 there is shown a third example of a ceramic filter according to the present invention. In the third example, either a hollow portion 14 in the form of a cylinder (Fig. 5), a hollow portion 14 in the form of a square pole (Fig. 6), or a hollow portion 14 in the form of a fine groove (Fig. 7) is formed in the central portion of a ceramic support body 10a. The hollow portion 14 is communicated with a laterally extending array 10d of second flow channels 12 and/or a vertically extending array 10d.

In the ceramic filter of the third example, the ceramic filtration membranes 10b are not present on the interior circumferential surfaces of the hollow portions 14, and the front end of each hollow portion 14 is closed with an eye-sealing member to prevent leakage of a filtrate. By this arrangement in the ceramic filter, a plurality of flow-resistance alleviation portions radially extending with the hollow portion 14 as the center, are constructed.

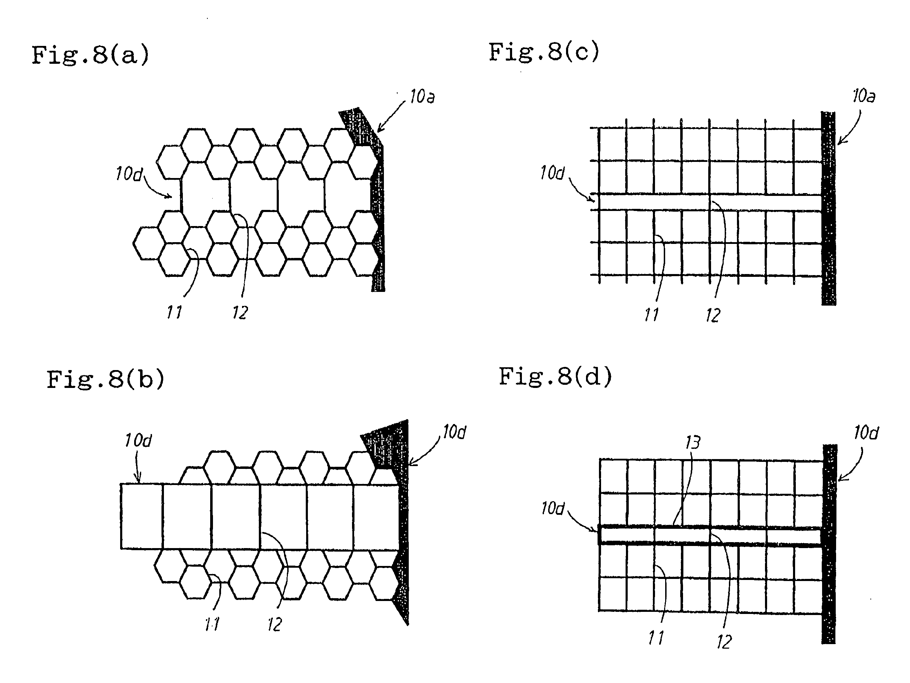

In Fig. 8 there is shown a fourth example of the ceramic filter according to the present invention. In the ceramic filter, the sectional configuration of the first flow channels 11 differs from that of the second flow channels 12. Figs. 8 (a) and (b) illustrate examples of the configuration of the second flow channel 12, deformed with respect to the hexagon-shaped first flow channel 11. Figs. 8(c) and (d) illustrate examples of the configuration of the second flow channel 12 deformed with respect to the square-shaped first flow channel 11. Note in Fig. 8 (d) that a thick partition wall 13 extending in a parallel direction to the second flow channel 12 is formed in order to reinforce an array 10d.

In the ceramic filter of the fourth example, each second flow channel 12 widens gradually, whereby the flow resistance of the array 10d is gradually reduced toward the exterior circumference of a ceramic support body 10a.

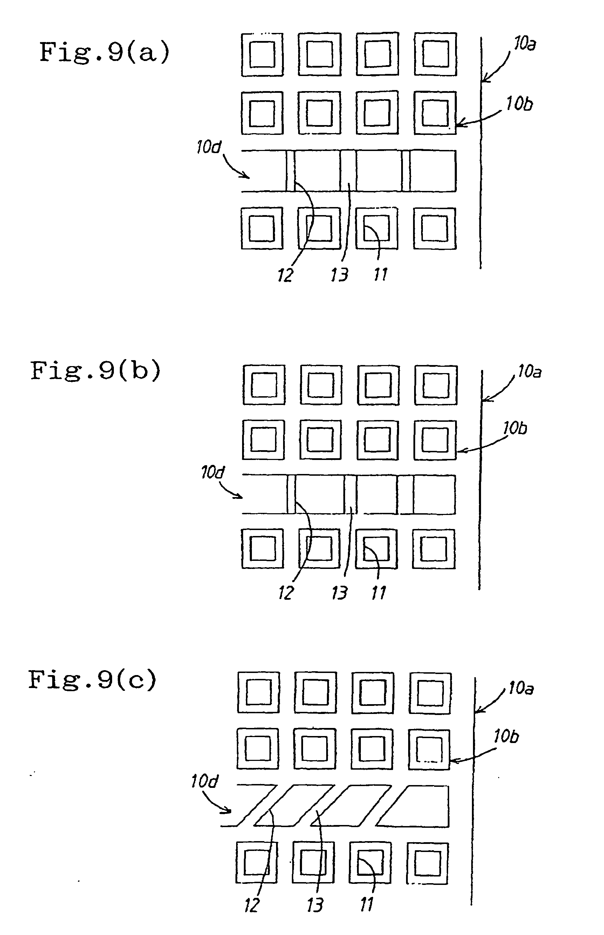

In Fig. 9 there is shown a fifth example of the ceramic filter according to the present invention. In this ceramic filter, a partition wall 13 defining the second flow channels 12 varies in shape. Figs. 9(a) and (b) illustrate examples in which the partition wall 13 defining the second flow channels 12 varies in thickness. Fig. 9(c) illustrates an example in which the partition wall 13 is inclined to enlarge the area thereof.

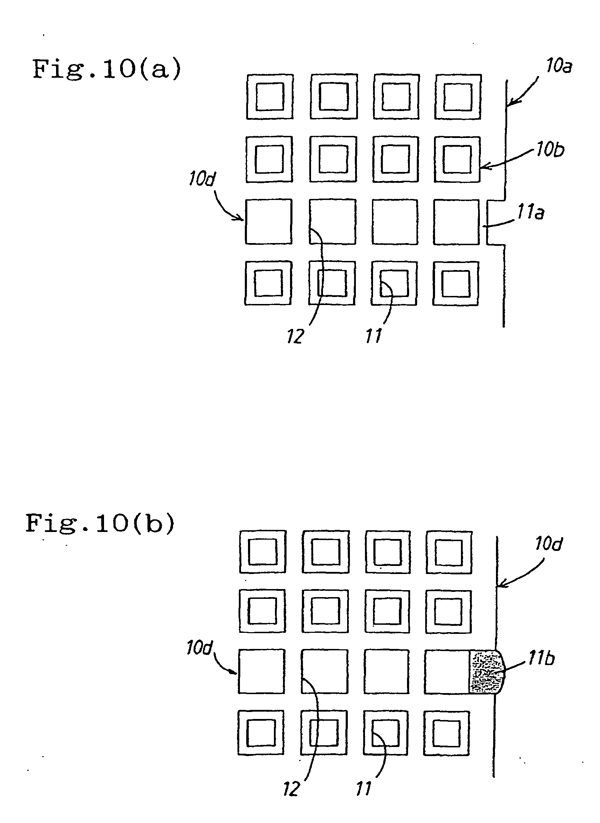

In Fig. 10 there is shown a sixth example of the ceramic filter according to the present invention. In the ceramic filter, the exterior wall of the outermost second flow channels 12 in an array 10d differs from that of the other second flow channels 12. Fig. 10(a) illustrates an example in which a portion 11a of the exterior circumferential wall of a ceramic support body 10a is thinned to reduce the flow resistance. Fig. 10(b) illustrates an example in which the portion 11a of the exterior circumferential wall of a ceramic support body 10a is filled with a low-resistance eye-sealing member 11b in order to reduce the flow resistance.

## Claims

1. A monolithic ceramic filter comprising:
a porous ceramic support body with a plurality of through holes defining first and second flow channels (11, 12) extending in a longitudinal direction thereof, in parallel to one another;
partition walls (13) for defining said first and second flow channels (11, 12); and
ceramic filtration membranes (10b) only provided on the interior circumferential surfaces of said partition walls defining said first flow channels (11);
the ceramic filtration membrane (10b) having a pore diameter smaller than that of said ceramic support body (10a) so that a portion of liquid to be treated, supplied from one end or both ends of said ceramic support body (10a) to each of said first flow channels (11) permeates through said ceramic filtration membranes (10b) and enters into said partition walls (13), then flows out of said ceramic support body (10a) through said partition walls (13);
wherein at least an array (10d) or a series of said second flow channels (12) extends toward the exterior circumferential surface of said ceramic support body (10a); and
longitudinal open ends of each of the flow channels constituting said array or series (10d) of said second flow channels (12) are sealed with sealing members (10c) made from porous material with pores having a diameter equal to or less than that of pores of said ceramic filtration membranes (10b),
**characterized in that**
said partition walls (13) for defining said first and second flow channels (11, 12) are formed by molding without being cut, wherein
said second flow channels (12) within one array or series are partitioned from each other by partition walls (13), each second flow channel forming an enclosed hollow space defined by said partition walls (13) and said sealing members (10c).

2. The monolithic ceramic filter as set forth in claim 1, wherein the number of the second flow channels (12) within one array or series is smaller than the number of the first flow channels (11) constituting other arrays.

3. The monolithic ceramic filter as set forth in claim 2, wherein the width measured in horizontal direction of at least one of the second flow channels (12) is wider than that of each first flow channel (11) constituting said other arrays.

4. The monolithic ceramic filter as set forth in claim 2 or 3, wherein each second flow channel (12) differs in shape from each first flow channel (11) constituting said other arrays.

5. The monolithic ceramic filter as set forth in any one of claims 1 through 4, wherein partition walls (13) between said first and second flow channels (11, 12) extending in horizontal direction are thicker than said partition walls extending in the same direction and defining first flow channels (11) only.

6. The monolithic ceramic filter as set forth in any one of claims 2 through 5, wherein the exterior wall of an outermost flow channel of the second flow channels (12) is thinner than that of an outermost flow channel of the first flow channels (11) constituting said other arrays.

7. The monolithic ceramic filter as set forth in any one of claims 1 through **6**, wherein partition walls (13) of the second flow channels (12) are parallel and inclined in relation to partition walls of said first flow channels (11) .

8. The monolithic ceramic filter as set forth in any one of claims 1 through 7, wherein the exterior wall of the outermost flow channel of the second flow channels (12) is formed from sealing member (11b) being provided in openings formed on an exterior circumferential surface of said ceramic support body (10a) and also having fine pores of a diameter larger than that of said exterior circumferential surface.

9. The monolithic ceramic filter as set forth in any one of claims 1 through 8, wherein widths of the second flow channels (12) become incrementally larger toward the exterior circumferential direction of said ceramic support body (10a).

10. The monolithic ceramic filter as set forth in any one of claims 1 through 9, wherein said ceramic support body (10a) additionally has a hollow portion (14) interrupting said array or series of second flow channels (12) and to which said array or series of second flow channels (12) is connected.

11. The monolithic ceramic filter as set forth in any one of claims 3 through 10, wherein a horizontal partition wall (13) between the second flow channels (12) is thinner than a horizontal partition wall (13) between the first flow channels (11) constituting said other arrays.

## Patentansprüche

1. Monolithischer Keramikfilter mit:
einem porösen keramischen Stützkörper mit einer Vielzahl von Durchgangslöchern, die erste und zweite Strömungskanäle (11, 12) definieren, die sich in seiner Längsrichtung parallel zueinander erstrecken;
Trennwänden (13) für ein Definieren der ersten und zweiten Strömungskanäle (11, 12); und
keramischen Filtermembranen (10b), die nur an den inneren Umfangsflächen der Trennwände, die die ersten Strömungskanäle (11) definieren, vorgesehen sind;
wobei die keramischen Filtermembranen (10b) einen Porendurchmesser haben, der kleiner als derjenige des keramischen Stützkörpers (10a) ist, so dass eine Portion einer zu behandelnden Flüssigkeit, die von einem Ende oder beiden Enden des keramischen Stützkörpers (10a) zu jedem der ersten Strömungskanäle (11) geliefert wird, die keramischen Filtermembranen (10b) durchdringt und in die Trennwände (13) eintritt, und dann aus dem keramischen Stützkörper (10a) durch die Trennwände (13) ausfliest;
wobei sich zumindest eine Aufreihung (10d) oder eine Reihe von den zweiten Strömungskanälen (12) in Richtung zu der äußeren Umfangsfläche des keramischen Stützkörpers (10a) erstreckt; und
offene Längsenden von jedem der Strömungskanäle, die diese Aufreihung oder Reihe (10d) der zweiten Strömungskanäle (12) bilden, mit Abdichtungselementen (10c) abgedichtet sind, die aus porösem Material mit Poren hergestellt sind, die einen Durchmesser haben, der gleich demjenigen oder kleiner als derjenige der Poren der keramischen Filtermembranen (10b) ist,
**dadurch gekennzeichnet, dass**
die Trennwände (13) für ein Definieren der ersten und zweiten Strömungskanäle (11, 12) durch Formgebung ausgebildet sind, ohne geschnitten zu werden, wobei
die zweiten Strömungskanäle (12) innerhalb einer Aufreihung oder Reihe durch Trennwände (13) voneinander getrennt sind, wobei jeder zweite Strömungskanal einen eingeschlossenen Hohlraum ausbildet, der durch die Trennwände (13) und die Abdichtungselemente (10c) definiert ist.

2. Monolithischer Keramikfilter nach Anspruch 1, wobei die Anzahl der zweiten Strömungskanäle (12) innerhalb einer Aufreihung oder Reihe geringer ist als die Anzahl der ersten Strömungskanäle (11), die andere Aufreihungen bilden.

3. Monolithischer Keramikfilter nach Anspruch 2, wobei die in horizontaler Richtung gemessene Breite von mindestens einem der zweiten Strömungskanäle (12) breiter als die jedes ersten Strömungskanals (11) ist, der die anderen Aufreihungen bildet.

4. Monolithischer Keramikfilter nach Anspruch 2 oder 3, wobei sich jeder zweite Strömungskanal (12) in Hinblick auf die Form von jedem ersten Strömungskanal (11) unterscheidet, der die anderen Aufreihungen bildet.

5. Monolithischer Keramikfilter nach einem der Ansprüche 1 bis 4, wobei Trennwände (13) zwischen den ersten und zweiten Strömungskanälen (11, 12), die sich in horizontaler Richtung erstrecken, dicker sind als die Trennwände, die sich in die selbe Richtung erstrecken und nur erste Strömungskanäle (11) definieren.

6. Monolithischer Keramikfilter nach einem der Ansprüche 2 bis 5, wobei die Außenwand eines äußersten Strömungskanals der zweiten Strömungskanäle (12) dünner ist als diejenige eines äußersten Strömungskanals der ersten Strömungskanäle (11), die die anderen Aufreihungen bilden.

7. Monolithischer Keramikfilter nach einem der Ansprüche 1 bis 6, wobei die Trennwände (13) der zweiten Strömungskanäle (12) parallel und schräg bezüglich der Trennwände der ersten Strömungskanäle (11) sind.

8. Monolithischer Keramikfilter nach einem der Ansprüche 1 bis 7, wobei die Außenwand des äußersten Strömungskanals der zweiten Strömungskanäle (12) aus einem Abdichtungselement (11b) ausgebildet ist, das in Öffnungen vorgesehen ist, die an einer äußeren Umfangsfläche des keramischen Stützkörpers (10a) ausgebildet sind und außerdem feine Poren mit einem Durchmesser hat, der größer als derjenige der äußeren Umfangsfläche ist.

9. Monolithischer Keramikfilter nach einem der Ansprüche 1 bis 8, wobei die Breite der zweiten Strömungskanäle (12) zu der äußeren Umfangsrichtung des keramischen Stützkörpers (10a) schrittweise größer wird.

10. Monolithischer Keramikfilter nach einem der Ansprüche 1 bis 9, wobei der keramische Stützkörper (10a) zusätzlich einen hohlen Abschnitt (14) hat, der die Aufreihung oder Reihe von zweiten Strömungskanälen (12) unterbricht und mit dem die Reihe oder Folge von zweiten Strömungskanälen (12) verbunden ist.

11. Monolithischer Keramikfilter nach einem der Ansprüche 3 bis 10, wobei eine horizontale Trennwand (13) zwischen den zweiten Strömungskanälen (12) dünner ist, als eine horizontale Trennwand (13) zwischen den ersten Strömungskanälen (11), die die anderen Aufreihungen bilden.

## Revendications

1. Filtre céramique monolithique comprenant :
un corps de support céramique poreux avec une pluralité d'alésages traversants définissant des premiers et seconds canaux d'écoulement (11, 12) s'étendant dans un sens longitudinal de ceux-ci, en parallèle les uns aux autres ;
des parois de séparation (13) pour définir lesdits premiers et seconds canaux d'écoulement (11, 12) ; et
des membranes de filtration céramiques (10b) prévues uniquement sur les surfaces circonférentielles intérieures desdites parois de séparation définissant lesdits premiers canaux d'écoulement (11) ;
la membrane de filtration céramique (10b) ayant un diamètre de pore plus petit que celui dudit corps de support céramique (10a) de sorte qu'une partie d'un liquide devant être traité, fournie à partir d'une extrémité ou des deux extrémités dudit corps de support céramique (10a) et vers chacun desdits premiers canaux d'écoulement (11) s'infiltre dans lesdites membranes de filtration céramiques (10b) et entre dans lesdites parois de séparation (13), puis s'écoule en dehors dudit corps de support céramique (10a) à travers lesdites parois de séparation (13) ;
dans lequel au moins un réseau (10d) ou une série desdits seconds canaux d'écoulement (12) s'étend vers la surface circonférentielle extérieure dudit corps de support céramique (10a) ; et
des extrémités ouvertes longitudinales de chacun des canaux d'écoulement constituant ledit réseau ou ladite série (10d) desdits seconds canaux d'écoulement (12) sont scellées avec des éléments de scellement (10c) fabriqués à partir d'un matériau poreux avec des pores ayant un diamètre égal ou inférieur à celui des pores desdites membranes de filtration céramiques (10b).

2. Filtre céramique monolithique selon la revendication 1, dans lequel le nombre des seconds canaux d'écoulement (12) à l'intérieur d'un réseau ou d'une série est plus petit que le nombre des premiers canaux d'écoulement (11) constituant d'autres réseaux.

3. Filtre céramique monolithique selon la revendication 2, dans lequel la largeur mesurée dans le sens horizontal d'au moins un des seconds canaux d'écoulement (12) est plus large que celle de chaque premier canal d'écoulement (11) constituant lesdits autres réseaux.

4. Filtre céramique monolithique selon la revendication 2 ou 3, dans lequel chaque second canal d'écoulement (12) a une forme différente de chaque premier canal d'écoulement (11) constituant lesdits autres réseaux.

5. Filtre céramique monolithique selon l'une quelconque des revendications 1 à 4, dans lequel les parois de séparation (13) entre lesdits premiers et seconds canaux d'écoulement (11), (12) s'étendant dans un sens horizontal sont plus épaisses que lesdites parois de séparation s'étendant dans le même sens et définissant les premiers canaux d'écoulement (11) uniquement.

6. Filtre céramique monolithique selon l'une quelconque des revendications 2 à 5, dans lequel la paroi extérieure d'un canal d'écoulement le plus à l'extérieur des seconds canaux d'écoulement (12) est plus mince que celle d'un canal d'écoulement le plus à l'extérieur des premiers canaux d'écoulement (11) constituant lesdits autres réseaux.

7. Filtre céramique monolithique selon l'une quelconque des revendications 1 à 6, dans lequel les parois de séparation (13) des seconds canaux d'écoulement (12) sont parallèles et inclinées par rapport aux parois de séparation desdits premiers canaux d'écoulement (11).

8. Filtre céramique monolithique selon l'une quelconque des revendications 1 à 7, dans lequel la paroi extérieure du canal d'écoulement le plus à l'extérieur des seconds canaux d'écoulement (12) est formé à partir de l'élément de scellement (11b) prévu dans des ouvertures formées sur une surface circonférentielle extérieure dudit corps de support céramique (10a) et également ayant des pores minces d'un diamètre plus grand que celui de ladite surface circonférentielle extérieure.

9. Filtre céramique monolithique selon l'une quelconque des revendications 1 à 8, dans lequel les largeurs des seconds canaux d'écoulement (12) deviennent de plus en plus grandes dans le sens circonférentiel extérieur dudit corps de support céramique (10a).

10. Filtre céramique monolithique selon l'une quelconque des revendications 1 à 9, dans lequel ledit corps de support céramique (10a) comporte en outre une partie creuse (14) interrompant ledit réseau ou ladite série de seconds canaux d'écoulement (12) et à laquelle ledit réseau ou ladite série des seconds canaux d'écoulement (12) est connecté.

11. Filtre céramique monolithique selon l'une quelconque des revendications 3 à 10, dans lequel une paroi de séparation horizontale (13) entre les seconds canaux d'écoulement (12) est plus mince qu'une paroi de séparation horizontale (13) entre les premiers canaux d'écoulement (11) constituant lesdits autres réseaux.
